# EUROPEAN PATENT APPLICATION

(11) **EP 4 585 457 A1**
(43) Date of publication of application: **16.07.2025**
(21) Application number: 23865720.9
(22) Date of filing: 31.07.2023
(51) Int. Cl.: B60L 58/18, B60L 50/60, H01M 10/42, H01M 4/525, H01M 4/505

(54) **BATTERY PACK FOR GENERATING SYNCHRONIZATION SIGNALS AND VEHICLE INCLUDING SAME**

(30) Priority: 16.09.2022 KR 20220117486
(71) Applicant: LG Energy Solution, Ltd., Seoul 07335 (KR)
(72) Inventor: LEE, Ye Seul, Daejeon 34122 (KR); YANG, Seong Yeol, Daejeon 34122 (KR); SIN, Jung Sik, Daejeon 34122 (KR)
(74) Representative: Plasseraud IP
(86) International application number: PCT/KR2023/011150
(87) International publication number: WO 2024/058419

(57) **Abstract**

A battery pack for generating a synchronization signal according to an embodiment disclosed herein includes one or more battery modules including a plurality of battery cells capable of supplying power to a motor of a vehicle and a battery management system electrically connected to another battery management system of another battery pack, in which the battery management system is configured to transmit a designated first synchronization signal to the other battery pack before performing a designated task, and receive a designated second synchronization signal from the other battery pack, determine a reference synchronization signal based on the first synchronization signal and the second synchronization signal, and perform the designated task based on the reference synchronization signal.

## Description

### [TECHNICAL FIELD]

### CROSS-REFERENCE TO RELATED APPLICATION

This application claims priority to and the benefit of Korean Patent Application No. 10-2022-0117486 filed in the Korean Intellectual Property Office on September 16, 2022, the entire contents of which are incorporated herein by reference.

### TECHNICAL FIELD

Embodiments disclosed herein relate to a battery pack for generating a synchronization signal and a vehicle including the battery pack.

### [BACKGROUND ART]

Batteries may charge power therein and supply power to a drive motor of a vehicle (e.g., an electric vehicle (EV) or a hybrid electric vehicle (HEV)).

The battery may include one or more battery packs. Each of the one or more battery packs may include a plurality of battery modules, each of which may include a plurality of battery cells. The one or more battery packs may be implemented with different materials (e.g., a positive electrode material, a negative electrode material, a separator, an electrolyte). For example, the positive electrode material may be implemented with a combination (e.g., NCM, NCA, or LFP) of nickel, cobalt, aluminum, manganese, etc. In another example, the negative electrode material may be implemented with graphite, silicon, etc.

The one or more battery packs may be managed by a battery management system (BMS).

The BMS may receive a control command from an electronic control unit (ECU) of a vehicle and control a battery pack based on the received control command.

### [DISCLOSURE]

### [TECHNICAL PROBLEM]

When a plurality of battery packs are mounted on a vehicle, a situation may occur where a battery pack for supplying power to a motor is changed. For example, balancing may be required among the plurality of battery packs of the vehicle, and the battery pack for supplying power to the motor may be changed to balance power capacities of the plurality of battery packs. However, even when the battery pack for supplying power to the motor is changed, power has to be continuously supplied.

When there is a large time error of operations of the plurality of battery packs in the situation where the battery pack for supplying power to the motor is changed, the power may not be supplied to the motor. Thus, it is necessary to synchronize the plurality of battery packs with one another to reduce the time error of the operations of the plurality of battery packs.

Technical problems of the embodiments disclosed herein are not limited to the above-described technical problems, and other unmentioned technical problems would be clearly understood by one of ordinary skill in the art from the following description.

### [TECHNICAL SOLUTION]

A battery pack for generating a synchronization signal according to an embodiment disclosed herein includes one or more battery modules including a plurality of battery cells capable of supplying power to a motor of a vehicle and a battery management system electrically connected to another battery management system of another battery pack, in which the battery management system is configured to transmit a designated first synchronization signal to the other battery pack before performing a designated task, and receive a designated second synchronization signal from the other battery pack, determine a reference synchronization signal based on the first synchronization signal and the second synchronization signal, and perform the designated task based on the reference synchronization signal.

In the battery pack for generating the synchronization signal according to an embodiment disclosed herein, the one or more battery modules of the battery pack and the one or more battery modules of the other battery pack may include at least one materials that are different from each other.

In the battery pack for generating the synchronization signal according to an embodiment disclosed herein, the one or more battery modules may be implemented using Ni, Co, and Mn (NCM) or silicon.

In the battery pack for generating the synchronization signal according to an embodiment disclosed herein, the reference synchronization signal may be a synchronization signal generated first between the first synchronization signal and the second synchronization signal, and the first synchronization signal may be generated after a designated time period from an immediately previous reference synchronization signal.

In the battery pack for generating the synchronization signal according to an embodiment disclosed herein, the reference synchronization signal may be a synchronization signal generated later between the first synchronization signal and the second synchronization signal, and the first synchronization signal may be generated after a designated time period from an immediately previous reference synchronization signal.

In the battery pack for generating the synchronization signal according to an embodiment disclosed herein, one of the battery pack and the other battery pack may selectively supply power to the motor.

In the battery pack for generating the synchronization signal according to an embodiment disclosed herein, the battery management system may be configured to transmit the first synchronization signal and receive the second synchronization signal, through an electrical connection path between an input/output (IO) pin of the battery management system and an IO pin of the other battery management system.

A vehicle including a battery pack for generating a synchronization signal according to an embodiment disclosed herein includes a motor configured to receive power and generate motive power, a first battery pack including a plurality of battery modules and a first battery management system, a second battery pack including a plurality of battery modules and a second battery management system, a switch configured to form an electrical path between the motor and the first battery pack and/or the second battery pack, and a controller configured to control the first battery pack and the second battery pack such that at least one of the first battery pack and the second battery pack selectively supplies power to the motor, in which the first battery management system and the second battery management system are configured to exchange synchronization signals with each other before performing designated tasks, respectively determine a reference synchronization signal based on the synchronization signals, and respectively perform the designated tasks based on the reference synchronization signal.

In the vehicle including the battery pack for generating the synchronization signal according to an embodiment disclosed herein, the one or more battery modules of the first battery pack and the one or more battery modules of the second battery pack may include at least one materials that are different from each other.

In the vehicle including the battery pack for generating the synchronization signal according to an embodiment disclosed herein, the reference synchronization signal may be a synchronization signal generated first between the synchronization signals.

In the vehicle including the battery pack for generating the synchronization signal according to an embodiment disclosed herein, the reference synchronization signal may be a synchronization signal generated later between the synchronization signals.

In the vehicle including the battery pack for generating the synchronization signal according to an embodiment disclosed herein, the synchronization signals may be exchanged through an electrical connection path between an input/output (IO) pin of the first battery management system and an IO pin of the second battery management system.

An operating method of a battery pack for generating a synchronization signal according to an embodiment disclosed herein includes transmitting a designated first synchronization signal to another battery pack before performing a designated task, and receiving a designated second synchronization signal from the other battery pack, determining a reference synchronization signal based on the first synchronization signal and the second synchronization signal, and performing the designated task based on the reference synchronization signal.

In the operating method of the battery pack for generating the synchronization signal according to an embodiment disclosed herein, one or more battery modules of the battery pack and one or more battery modules of the other battery pack may include at least one materials that are different from each other.

In the operating method of the battery pack for generating the synchronization signal according to an embodiment disclosed herein, the reference synchronization signal may be a synchronization signal generated first between the first synchronization signal and the second synchronization signal, and the first synchronization signal may be generated after a designated time period from an immediately previous reference synchronization signal.

### [ADVANTAGEOUS EFFECTS]

In a battery pack and a vehicle including the same according to various embodiments disclosed herein, operations of a plurality of battery packs may be synchronized with one another. Thus, an operation error of each of the plurality of battery packs may be reduced.

The effects of the battery pack and the vehicle including the same according to the disclosure of the present document are not limited to the effects mentioned above, and other effects not mentioned will be clearly understood by those of ordinary skill in the art according to the disclosure of the present document.

### [DESCRIPTION OF DRAWINGS]

FIG. 1 is a block diagram of a vehicle according to an embodiment of the present disclosure.
FIG. 2A is a timing diagram of a battery pack of a vehicle according to an embodiment of the present disclosure.
FIG. 2B is a timing diagram of a battery pack of a vehicle according to an embodiment of the present disclosure.
FIG. 3 is a flowchart illustrating operations of a battery pack of a vehicle according to an embodiment of the present disclosure.
FIG. 4 is a flowchart illustrating operations of a battery pack of a vehicle according to an embodiment of the present disclosure.

With regard to the description of the drawings, similar reference numerals may be used to refer to similar or related components.

### [MODE FOR INVENTION]

Hereinafter, embodiments of the present disclosure will be described with reference to the accompanying drawings. However, the description is not intended to limit the present disclosure to particular embodiments, and it should be construed as including various modifications, equivalents, and/or alternatives according to the embodiments of the present disclosure.

It should be appreciated that embodiments of the present document and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly or wirelessly), or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the multiple entities may be separately disposed in different components. According to various embodiments disclosed herein, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

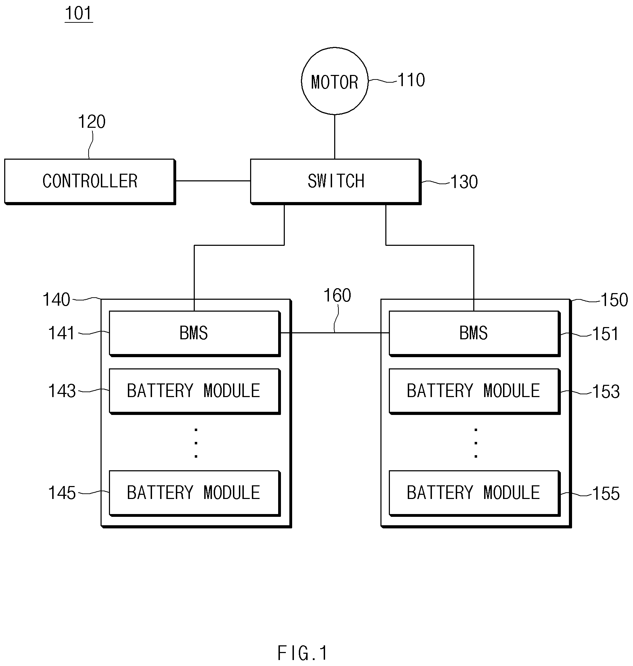

FIG. 1 is a block diagram of a vehicle 101 according to an embodiment of the present disclosure.

Referring to FIG. 1, the vehicle 101 may include a motor 110, a controller 120, a switch 130, and a plurality of battery packs 140 and 150. Components of the vehicle 101 (the controller 120, the switch 130, and the plurality of battery packs 140 and 150) may be electrically connected to one another using an in-vehicle network (IVN) technique. The IVN technique may include a controller area network (CAN), a media oriented systems transport (MOST) network, a local interconnect network (LIN), Ethernet, and/or X-by-Wire (flexray). According to an embodiment, the vehicle 101 may further include components not shown in FIG. 1. For example, the vehicle 101 may further include an inverter between the motor 110 and the switch 130. The inverter may include a DC-DC converter.

In an embodiment, the vehicle 101 may include an electric vehicle (EV), a hybrid EV (HEV), a plug-in HEV (PHEV), and/or a fuel cell EV (FCEV).

In an embodiment, the motor 110 may convert power transmitted through the switch 130 into motive power (motor motive power) to transmit the power to a driving wheel of the vehicle 101. A rotational direction, a rotational force, and a revolution per minute (RPM) of the motor 110 may be determined by a voltage of the power transmitted through the switch 130.

In an embodiment, the motor 110 may generate back electromotive force during regenerative braking of the vehicle 101. In an embodiment, the back electromotive force may be used to charge the plurality of battery packs 140 and 150.

In an embodiment, the controller 120 may control charge and/or discharge of the plurality of battery packs 140 and 150. In an embodiment, the controller 120 may further include a communication module, a processor, and a memory that are not shown in the drawings. The memory of the controller 120 may be a non-transitory storage medium having stored therein instructions executed by the processor. The memory of the controller 120 may be implemented with at least one of storage media such as flash memory, hard disk, solid state disk (SSD), random access memory (RAM), static random access memory (SRAM), read only memory (ROM), programmable read only memory (PROM), electrically erasable and programmable ROM (EEPROM), erasable and programmable ROM (EPROM), and/or a register, etc. The processor of the controller 120 may be implemented with at least one of processing devices such as an application specific integrated circuit (ASIC), a digital signal processor (DSP), programmable logic devices (PLD), field programmable gate arrays (FPGAs), a central processing unit (CPU), microcontrollers, microprocessors, etc.

In an embodiment, the controller 120 may control the switch 130 to set a transmission path of power. In an embodiment, the controller 120 may control the switch 130 to electrically connect all of the plurality of battery packs 140 and 150 to the motor 110. For example, the controller 120 may control the switch 130 based on battery information of the plurality of battery packs 140 and 150. In an embodiment, the controller 120 may control the switch 130 to electrically disconnect all of the plurality of battery packs 140 and 150 from the motor 110. In an embodiment, the controller 120 may control the switch 130 to electrically connect one of the plurality of battery packs 140 and 150 to the motor 110 and to electrically disconnect the other one battery pack from the motor 110. In an embodiment, the controller 120 may control the switch 130 to switch the battery pack electrically connected to the motor 110.

In an embodiment, the switch 130 may generate a transmission path of power. For example, the switch 130 may be implemented as a relay.

In an embodiment, the plurality of battery packs 140 and 150 may be implemented with different materials (e.g., a material of a positive electrode material, a negative electrode material, a separator, or an electrolyte). In an embodiment, the plurality of battery packs 140 and 150 may have at least one material that are different from each other. For example, the battery pack 140 may include battery cells using NCM, and the battery pack 150 may include battery cells using silicon. When the plurality of battery packs 140 and 150 are implemented with different materials, characteristics (e.g., lifespan, energy density, charging speed) of the plurality of battery packs 140 and 150 may be different from each other. For example, battery cells using Ni, Co, and Mn (NCM) have long lifespans, but have low energy densities and are not capable of fast charging, but battery cells using Si have short lifespans, but have high energy densities and are capable of fast charging. In another embodiment, the plurality of battery packs 140 and 150 may be implemented with the same materials.

In an embodiment, the battery pack 140 may include a BMS 141 and a plurality of battery modules 143 and 145. In an embodiment, the BMS 141 may obtain battery information (e.g., a state of charge (SoC) and a battery state (over-voltage, over-current, over-heat, etc.)) of the plurality of battery modules 143 and 145 in real time. In an embodiment, the BMS 141 may provide the battery information to the controller 120. In an embodiment, the battery information may include information about voltage, current, temperature, SoC, and state of health (SoH) of the plurality of battery modules 143 and 145.

In an embodiment, the BMS 141 may initiate a task based on a reference synchronization signal. In an embodiment, the BMS 141 may initiate the task from the reference synchronization signal. In an embodiment, the task may be performed for at least designated time period. In an embodiment, the reference synchronization signal may be determined based on a first synchronization signal of the BMS 141 and/or a second synchronization signal of a BMS 151. In an embodiment, the designated time period may have a previously set time length (e.g., 100 milliseconds). In an embodiment, the task may mean a unit process performed by the BMS 141. In an embodiment, the task may include control of the plurality of battery modules 143 and 145, obtaining of the battery information of the plurality of battery modules 143 and 145, or data transmission. For example, the task may include transmitting a battery cell voltage measurement command, requesting battery cell voltage transmission, calculating voltage and/or current of the battery pack 140, transmitting the voltage and/or the current of the battery pack 140, and controlling a battery disconnect unit (BDU). In an embodiment, the task may be performed across at least designated time period.

In an embodiment, the battery pack 150 may include the BMS 151 and a plurality of battery modules 153 and 155. In an embodiment, the BMS 151 may obtain battery information (e.g., an SoC and a battery state (over-voltage, over-current, over-heat, etc.)) of the plurality of battery modules 153 and 155 in real time. In an embodiment, the BMS 151 may provide the battery information to the controller 120. In an embodiment, the battery information may include information about voltage, current, temperature, SoC, and SoH of the plurality of battery modules 153 and 155.

In an embodiment, the BMS 151 may initiate a task based on a reference synchronization signal. In an embodiment, the BMS 151 may initiate the task from the reference synchronization signal. In an embodiment, the task may be performed for at least designated time period. In an embodiment, the reference synchronization signal may be determined based on the second synchronization signal of the BMS 151 and/or the first synchronization signal of the BMS 141. In an embodiment, the designated time period may have a previously set time length (e.g., 100 milliseconds). In an embodiment, the task may mean a unit process performed by the BMS 151. In an embodiment, the task may include control of the plurality of battery modules 153 and 155, obtaining of the battery information of the plurality of battery modules 153 and 155, or data transmission. For example, the task may include transmitting a battery cell voltage measurement command, requesting battery cell voltage transmission, calculating voltage and/or current of the battery pack 150, transmitting the voltage and/or the current of the battery pack 150, and controlling a BDU. In an embodiment, the task may be performed across at least designated time period.

Hereinbelow, a description will be made of an operation of the BMSs 141 and 151 determining the reference synchronization signal and performing a task. Although the following description is made based on the BMS 141 as an example, it may also be applied to the BMS 151.

In an embodiment, the BMS 141 may have an internal clock clk. A clock signal of the internal clock may be generated periodically. In an embodiment, the BMS 141 may generate a first synchronization signal based on a designated number of clock signals. For example, when the clock signal is generated at intervals of 1 milliseconds and the designated time period is 100 milliseconds, the BMS 141 may generate the first synchronization signal upon generation of 100 clock signals.

In an embodiment, the BMS 141 may generate the first synchronization signal after the designated time period (e.g., 100 milliseconds) from the immediately previous reference synchronization signal.

In an embodiment, the BMS 141 may transmit the first synchronization signal to the BMS 151 through an electrical connection path 160 between the BMS 141 and the BMS 151. In an embodiment, the electrical connection path 160 between the BMS 141 and the BMS 151 may be formed between an input/output (IO) pin of a microcontroller (MCU) included in the BMS 141 and an IO pin of an MCU of the BMS 151. In an embodiment, one or more electrical connection paths 160 may be formed. Herein, generation of the first synchronization signal and transmission of the first synchronization signal may occur substantially at the same time.

In an embodiment, the BMS 141 may receive the second synchronization signal of the BMS 151 from the BMS 151 through the electrical connection path 160. In an embodiment, the second synchronization signal may be generated based on the clock signal of the internal clock clk of the BMS 151. Herein, generation of the second synchronization signal and reception of the second synchronization signal may occur substantially at the same time.

In an embodiment, operations of the BMS 141 generating the first synchronization signal and receiving the second synchronization signal from the BMS 151 may be understood as operations of the BMS 141 and the BMS 151 exchanging synchronization signals with each other.

In an embodiment, the BMS 141 may determine the reference synchronization signal based on the first synchronization signal and the second synchronization signal. In an embodiment, the BMS 141 may determine, as the reference synchronization signal, the synchronization signal generated first between the first synchronization signal and the second synchronization signal. In another embodiment, the BMS 141 may determine, as the reference synchronization signal, the synchronization signal generated later between the first synchronization signal and the second synchronization signal.

In an embodiment, the BMS 141 may perform a designated task based on the reference synchronization signal. In an embodiment, the BMS 141 may initiate the task from the reference synchronization signal. For example, the BMS 141 may perform control of the plurality of battery modules 153 and 155, obtaining of the battery information of the plurality of battery modules 153 and 155, or data transmission, within the designated time period from the reference synchronization signal.

Thereafter, the BMS 141 may generate a new first synchronization signal based on a designated number of clock signals generated from the reference synchronization signal.

According to an embodiment, the BMS 141 may not generate the first synchronization signal. For example, when the reference synchronization signal is determined to be the synchronization signal generated first, the BMS 141 may not generate the first synchronization signal upon receiving the second synchronization signal of the BMS 151.

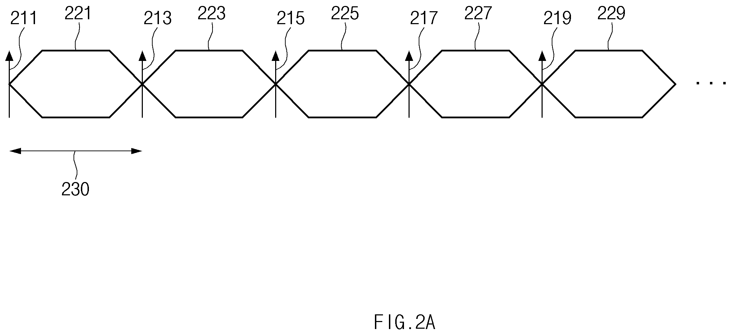

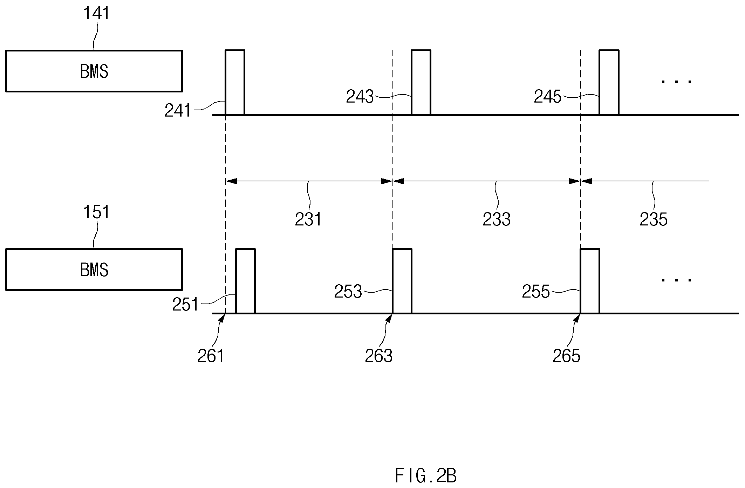

FIG. 2A is a timing diagram of the battery packs 140 and 150 of the vehicle 101 according to an embodiment of the present disclosure. FIG. 2B is a timing diagram of the battery packs 140 and 150 of the vehicle 101 according to an embodiment of the present disclosure.

Referring to FIG. 2A, a plurality of tasks 221, 223, 225, 227, and 229 may be initiated from reference synchronization signals 211, 213, 215, 217, and 219. The plurality of tasks 221, 223, 225, 227, and 229 may be performed within a designated time period 230.

Referring to FIG. 2B, the BMS 141 may generate a first synchronization signal 241 at a first timepoint 261, and the BMS 151 may generate a second synchronization signal 251 later than the first timepoint 261. In this case, the reference synchronization signal of the BMS 141 and the BMS 151 may be determined to be the first synchronization signal 241. Thereafter, the BMS 141 and the BMS 151 may respectively perform tasks during a designated time period 231 from the first synchronization signal 241.

Each of the BMS 141 and the BMS 151 may generate a synchronization signal after the designated time period 231 from the reference synchronization signal at the first timepoint 261. However, for various reasons (e.g., an internal clock error), timepoints of synchronization signal generation of the BMSs 141 and 151 may be different from each other.

Referring to FIG. 2B, the BMS 141 may generate a first synchronization signal 243 later than a second timepoint 263, and the BMS 151 may generate a second synchronization signal 253 at the second timepoint 263. In this case, the reference synchronization signal of the BMS 141 and the BMS 151 may be determined to be the second synchronization signal 253. Thereafter, the BMS 141 and the BMS 151 may respectively perform tasks during a designated time period 233 from the second synchronization signal 253.

Referring to FIG. 2B, the BMS 141 may generate the first synchronization signal 243 later than a third timepoint 265, and the BMS 151 may generate the second synchronization signal 253 at the third timepoint 265. In this case, the reference synchronization signal of the BMS 141 and the BMS 151 may be determined to be the second synchronization signal 255. Thereafter, the BMS 141 and the BMS 151 may respectively perform tasks during a designated time period 235 from the second synchronization signal 255.

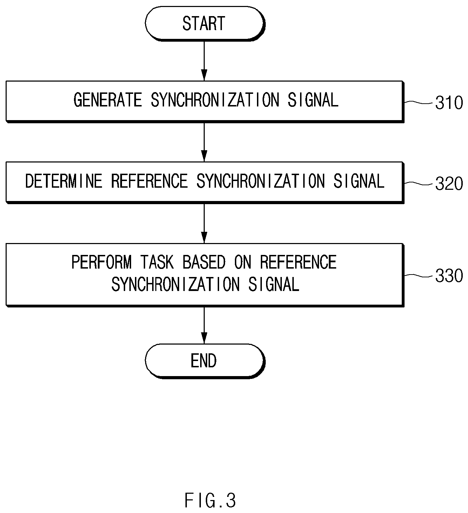

FIG. 3 is a flowchart illustrating operations of the battery packs 140 and 150 of the vehicle 101 according to an embodiment of the present disclosure. Hereinbelow, it will be described with reference to FIG. 3 that the operations are performed using the BMS 141. However, the operations of FIG. 3 may also be performed by the BMS 151.

Referring to FIG. 3, in operation 310, the BMS 141 may generate a synchronization signal. In an embodiment, the BMS 141 may generate the first synchronization signal after the designated time period from a previous reference synchronization timepoint.

In operation 320, the BMS 141 may determine the reference synchronization signal. The BMS 141 may determine the reference synchronization signal based on the first synchronization signal of the BMS 141 and/or the second synchronization signal of the BMS 151. In an embodiment, the BMS 141 may determine, as the reference synchronization signal, the synchronization signal generated first between the first synchronization signal and the second synchronization signal. In another embodiment, the BMS 141 may determine, as the reference synchronization signal, the synchronization signal generated later between the first synchronization signal and the second synchronization signal.

In operation 330, the BMS 141 may perform a task based on the reference synchronization signal. In an embodiment, the BMS 141 may initiate the task from the reference synchronization signal. For example, the BMS 141 may perform control of the plurality of battery modules 153 and 155, obtaining of the battery information of the plurality of battery modules 153 and 155, or data transmission, within the designated time period from the reference synchronization signal.

Thereafter, the BMS 141 may perform again the operations of FIG. 3.

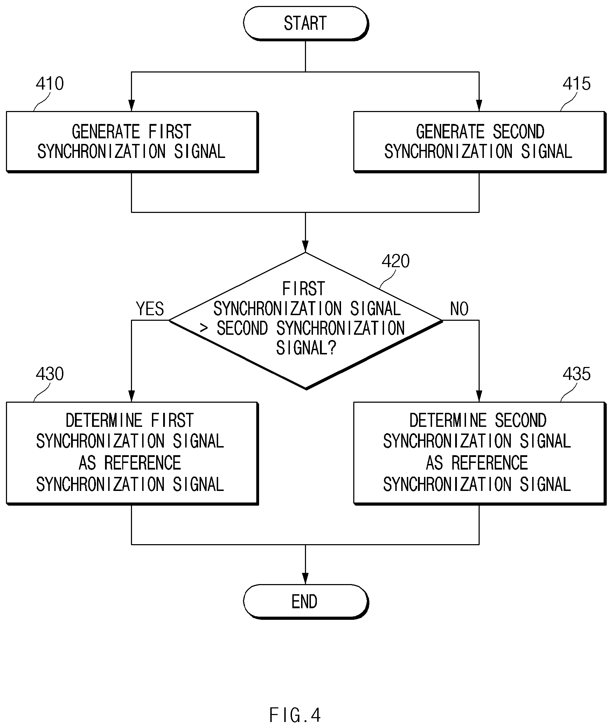

FIG. 4 is a flowchart illustrating the operations of the battery packs 140 and 150 of the vehicle 101 according to an embodiment of the present disclosure. Hereinbelow, it will be described with reference to FIG. 3 that the operations are performed using the BMS 141. However, the operations of FIG. 3 may also be performed by the BMS 151.

Referring to FIG. 4, in operation 410, the BMS 141 may generate the first synchronization signal. In an embodiment, the BMS 141 may generate the first synchronization signal after the designated time period from a previous reference synchronization timepoint.

In operation 415, the BMS 141 may receive the second synchronization signal. In an embodiment, the BMS 141 may receive the second synchronization signal of the BMS 151 through the electrical connection path 160 between the BMS 141 and the BMS 151. In an embodiment, the electrical connection path 160 between the BMS 141 and the BMS 151 may be formed between the IO pin of the MCU included in the BMS 141 and the IO pin of the MCU of the BMS 151. In an embodiment, one or more electrical connection paths 160 may be formed. Herein, generation of the second synchronization signal and reception of the second synchronization signal may occur substantially at the same time.

In operation 420, the BMS 141 may determine whether the first synchronization signal is generated before the second synchronization signal.

In an embodiment, when the first synchronization signal is generated before the second synchronization signal, the BMS 141 may perform operation 430. In an embodiment, when the first synchronization signal is generated later than the second synchronization signal, the BMS 141 may perform operation 435.

In operation 430, the BMS 141 may determine the first synchronization signal as the reference synchronization signal. In operation 435, the BMS 141 may determine the second synchronization signal as the reference synchronization signal.

Thereafter, the BMS 141 may perform again the operations of FIG. 4.

While it is shown in FIG. 4 that both operations 410 and 415 are performed, this is merely an example. According to an embodiment, only one of operation 410 and 415 may be performed. For example, when the first synchronization signal is generated before generation of the second synchronization signal, the BMS 151 may not generate the second synchronization signal. In this case, operation 415 may not be performed. In another example, when the second synchronization signal is received before generation of the first synchronization signal, the BMS 141 may not generate the first synchronization signal. In this case, operation 410 may not be performed. In this case, the BMS 141 and the BMS 151 may determine the one generated synchronization signal as the reference synchronization signal.

## Claims

1. A battery pack for generating a synchronization signal, the battery pack comprising:
one or more battery modules comprising a plurality of battery cells capable of supplying power to a motor of a vehicle; and
a battery management system electrically connected to another battery management system of another battery pack,
wherein the battery management system is configured to:
transmit a designated first synchronization signal to the other battery pack before performing a designated task, and receive a designated second synchronization signal from the other battery pack;
determine a reference synchronization signal based on the first synchronization signal and the second synchronization signal; and
perform the designated task based on the reference synchronization signal.

2. The battery pack of claim 1, wherein the one or more battery modules and one or more battery modules of the other battery pack comprise at least one materials that are different from each other.

3. The battery pack of claim 2, wherein the one or more battery modules are implemented using Ni, Co, and Mn (NCM) or silicon.

4. The battery pack of claim 1, wherein the reference synchronization signal is a synchronization signal generated first between the first synchronization signal and the second synchronization signal, and the first synchronization signal is generated after a designated time period from an immediately previous reference synchronization signal.

5. The battery pack of claim 1, wherein the reference synchronization signal is a synchronization signal generated later between the first synchronization signal and the second synchronization signal, and the first synchronization signal is generated after a designated time period from an immediately previous reference synchronization signal.

6. The battery pack of claim 1, wherein one of the battery pack and the other battery pack selectively supplies power to the motor.

7. The battery pack of claim 1, wherein the battery management system is configured to transmit the first synchronization signal and receive the second synchronization signal, through an electrical connection path between an input/output (IO) pin of the battery management system and an IO pin of the other battery management system.

8. A vehicle comprising a battery pack for generating a synchronization signal, the vehicle comprising:
a motor configured to receive power and generate motive power;
a first battery pack comprising a plurality of battery modules and a first battery management system;
a second battery pack comprising a plurality of battery modules and a second battery management system;
a switch configured to form an electrical path between the motor and the first battery pack and/or the second battery pack; and
a controller configured to control the first battery pack and the second battery pack such that at least one of the first battery pack and the second battery pack selectively supplies power to the motor,
wherein the first battery management system and the second battery management system are configured to:
exchange synchronization signals with each other before performing designated tasks;
respectively determine a reference synchronization signal based on the synchronization signals; and
respectively perform the designated tasks based on the reference synchronization signal.

9. The vehicle of claim 8, wherein the one or more battery modules of the first battery pack and the one or more battery modules of the second battery pack comprise at least one materials that are different from each other.

10. The vehicle of claim 8, wherein the reference synchronization signal is a synchronization signal generated first between the synchronization signals.

11. The vehicle of claim 8, wherein the reference synchronization signal is a synchronization signal generated later between the synchronization signals.

12. The vehicle of claim 8, wherein the synchronization signals are exchanged through an electrical connection path between an input/output (IO) pin of the first battery management system and an IO pin of the second battery management system.

13. An operating method of a battery pack for generating a synchronization signal, the operating method comprising:
transmitting a designated first synchronization signal to another battery pack before performing a designated task, and receiving a designated second synchronization signal from the other battery pack;
determining a reference synchronization signal based on the first synchronization signal and the second synchronization signal; and
performing the designated task based on the reference synchronization signal.

14. The operating method of claim 13, wherein one or more battery modules of the battery pack and one or more battery modules of the other battery pack comprise at least one materials that are different from each other.

15. The operating method of claim 13, wherein the reference synchronization signal is a synchronization signal generated first between the first synchronization signal and the second synchronization signal, and the first synchronization signal is generated after a designated time period from an immediately previous reference synchronization signal.
